Europäisches Patentamt

European Patent Office

Office européen des brevets

(11) Publication number: **0 261 302**
**A2**

# EUROPEAN PATENT APPLICATION

(21) Application number: 87105716.2

(22) Date of filing: 16.04.87

(51) Int. Cl.⁴: **B65D 65/12** , B65D 5/12 , B65D 5/42 , B65D 6/14 , B65D 5/74

Claims 12, 16 and 18 are deemed to be abandoned due to non-payment of the claims fees (Rule 31 (3) EPC).

(30) Priority: 22.09.86 ZA 867176

(43) Date of publication of application:
30.03.88 Bulletin 88/13

(84) Designated Contracting States:
CH DE ES FR IT LI

(71) Applicant: **Deutsche Sisi Werke GmbH**
**Rudolf Wildstrasse 4-6**
**D-6904 Eppelheim/Heidelberg(DE)**

Applicant: **Dorrington, Kenneth Neville**
**76 Protea Road**
**Newlands 7700(ZA)**

(72) Inventor: **Dorrington, Kenneth Neville**
**76 Protea Road**
**Newlands 7700(ZA)**

(74) Representative: **Patentanwälte Grünecker,**
**Kinkeldey, Stockmair & Partner**
**Maximilianstrasse 58**
**D-8000 München 22(DE)**

(54) **Containers.**

(57) The invention relates to a sheet of material for use in producing containers, which comprises a flexible sheet, a number of spaced apart overlapped longitudinal folds provided in the sheet, and attachment means for suitably holding the folds together for stiffening the sheets in longitudinal direction.

FIG. 11

EP 0 261 302 A2

# CONTAINERS

## FIELD OF INVENTION

The present invention relates to containers.

## BACKGROUND TO INVENTION

It is known to construct containers, in particular for liquids, from various materials.

Where flexible sheet material is used, the problem is that such material often is weak in longitudinal direction and containers made therefrom collapse easily. However, if the thickness of the sheet material is increased the cost of the container is proportionately increased and this often makes such types of containers uneconomical.

It is an object of the invention to suggest a new type of container which will be relatively economical to produce and be of satisfactory longitudinal strength.

## SUMMARY OF INVENTION

According to the invention, a sheet of material for use in producing containers comprises a number of spaced apart overlapped longitudinal folds provided in the sheet, and attachment means for suitably holding the folds together for stiffening the sheets in longitudinal direction.

The folds may be substantially parallel.

Also according to the invention, a cylindrical sleeve for producing a container includes a flexible sheet, a number of spaced apart overlapped longitudinal folds provided in the sheet, and attachment means for suitably holding the folds together for stiffening the sheets in longitudinal direction.

The attachment means for holding the overlapped folds together may include a weld, glue, a heatseal, a heatmelt or any other suitable means.

The cylindrical sleeve may be of any suitable cross-sectional shape, such as substantially round cylindrical shape, square-shape, rectangular shape, triangular shape, or any other polygonal cross-sectional shape.

The flexible sheet may be made of plastics sheet material, paper sheet material, a laminated sheet material, a metallized plastics or aluminium foil material or any other suitable type of sheet material.

In one instance the sheet material may be made of a lamination including the following sheets or films laminated together; aluminium foil, LLDPE (Linear Low density Polyethylene), PET (polyethyleneterepethalate), LDPE (low density polyethylene) metallized PET, metallized PP (Polypropylene), or PVdC (Polyvinyledene chloride) coated PET.

Further according to the invention, a container includes a cylindrical sleeve comprising a flexible sheet, a number of spaced apart overlapped longitudinal folds provided in the sheet, attachment means for suitably holding the folds together for stiffening the sheets in longitudinal direction, and an end closure member joined to each open end of the cylindrical sleeve and being sealed thereto.

The container may be in the form of a can adapted for containing liquid, eg. beverages, or pastes, powders, granules or solids.

Yet further according to the invention, a method of producing a container includes the steps of folding a flexible sheet along a number of spaced apart folding lines so as to define substantially parallel spaced apart folding sections, of joining the folded sections together, of joining the free ends of the sheet together into an elongated tubular sleeve, of cutting the tubular sleeve transversely into suitable lengths to form cylindrical sleeves, of opening such a cylindrical sleeve and closing one open end by means of an end member sealed thereto, of filling goods, such as beverages, into the other open end, and of closing the remaining open end by means of an end cap and sealing it thereto.

## BRIEF DESCRIPTION OF DRAWINGS

The invention will now be described by way of example with reference to the accompanying - schematic drawings.

In the drawings there is shown in

Figure 1 a side view of a first embodiment of a sheet of material in layflat form in accordance with the invention:

Figure 2 on a larger scale, an end view of part of the sheet seen along arrow II in Figure 1;

Figure 3 a view of the sheet of material of Figure 1 showing the folded sections before being joined together;

Figure 4 on a larger scale, an end view of a folded section seen along arrow IV in Figure 3;

Figure 5 a side view of a second embodiment of a sheet of material in layflat form in accordance with the invention;

Figure 6 on a larger scale, an end view of part of the sheet seen along arrow VI in Figure 5;

Figure 7 on a larger scale, an end view of a folding section folded from the sheet material illustrated in Figures 5 and 6;

Figure 8 a view of the sheets of Figures 1 to 7 showing the joining of the longitudinal free ends of a sheet intermediate between two folding sections;

Figure 9 a view corresponding to Figure 8 but showing the joining of the longitudinal free ends of the sheets to define a folding section;

Figure 10 on a reduced scale, a view of an elongated sleeve produced from the sheets illustrated in Figures 1 to 9, when in layflat form and prior to cutting into sections;

Figure 11 a perspective view of a container constructed of a folded cylindrical body made from the sheet material illustrated in the preceding drawings;

Figure 12 on a larger scale, a sectional end view of the lid and wall connection seen along arrows XII-XII in Figure 11;

Figure 13 a plan view of the container of Figure 11 seen along arrow XIII in Figure 11;

Figure 14 a plan view of another cross-sectional shape of a container;

Figure 15 a plan view of a further cross-sectional shape of a container;

Figure 16 a plan view of yet another cross-sectional shape of a container;

Figure 17 a perspective view of a container corresponding to the container illustrated in Figure 11 but having a reinforced lug for the fitting of a pouring nozzle; and

Figure 18 on a larger scale, a sectional view through part of the container and the lug along the arrows XVIII-XVIII in Figure 17.

DETAILED DESCRIPTION OF DRAWINGS

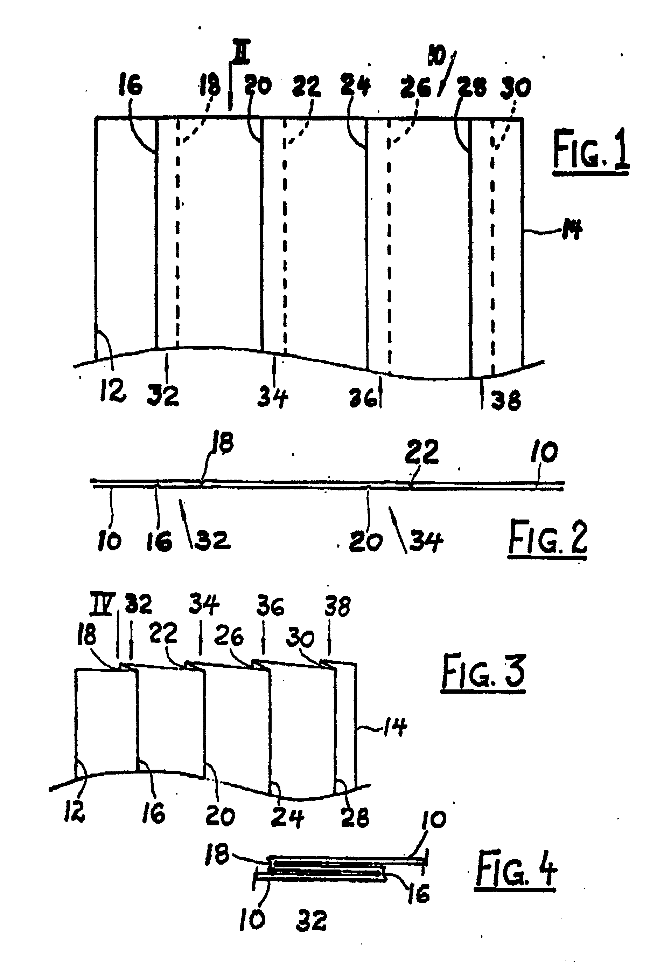

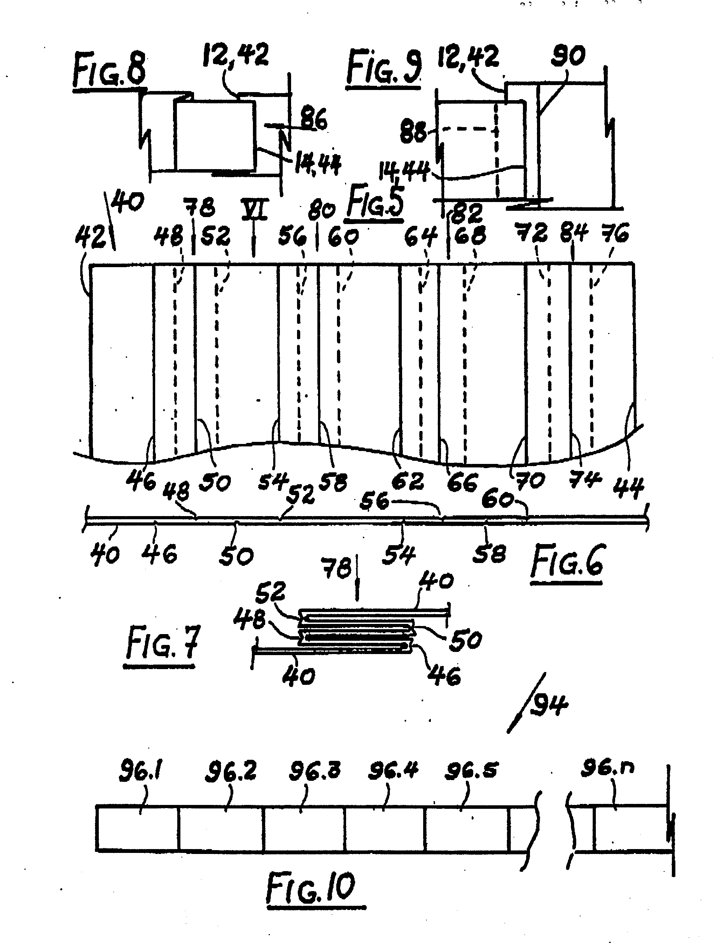

In Figures 1 to 4 a first embodiment of a sheet material 10 in accordance with the invention is shown. The sheet of flexible material 10 has longitudinal edges 12, 14. Between the edges 12, 14 substantially parallel longitudinal folding lines 16......30 are provided in pairs as shown so as to define folding sections 32...38. These folding sections, when folded over, are respectively held together by suitable means, which may involve glueing, welding, heat-sealing or by any other suitable means.

Any number of folding lines may be provided and the numbers of folds overlapping will determine the longitudinal strength of the container incorporating such flexible material.

As a further example of an embodiment in accordance with the invention, a sheet 40 is illustrated in Figure 5 where, between the longitudinal edges 42, 44, groups of substantially parallel folding lines with more folding lines than those in Figure 1 are provided. Here the folding lines 46...76 are grouped together in groups of four so as to define folding sections 78...84.

When folded together, as illustrated in Figure 6, a double folding section of higher strength is obtainable. The folding sections are held together by glueing, etc. as mentioned with reference to Figures 1 to 4.

Referring to Figure 8 one possibility of joining the end edges 12 and 14 (or 42 and 44) is shown. In this case the edges are overlapped so as to provide an intermediate joining section 86 between the folding sections 38 and 32 (or 78 and 84).

However, as shown in Figure 9 it is possible to have a folding line 88 adjacent the edge 14, 44 and a folding line 90 adjacent the edge 12, 42 so as to define a folding section 92, which can be in place of one of the folding sections 32...38 (or 78...84) as illustrated in Figure 1 or Figure 2 or be in addition thereto.

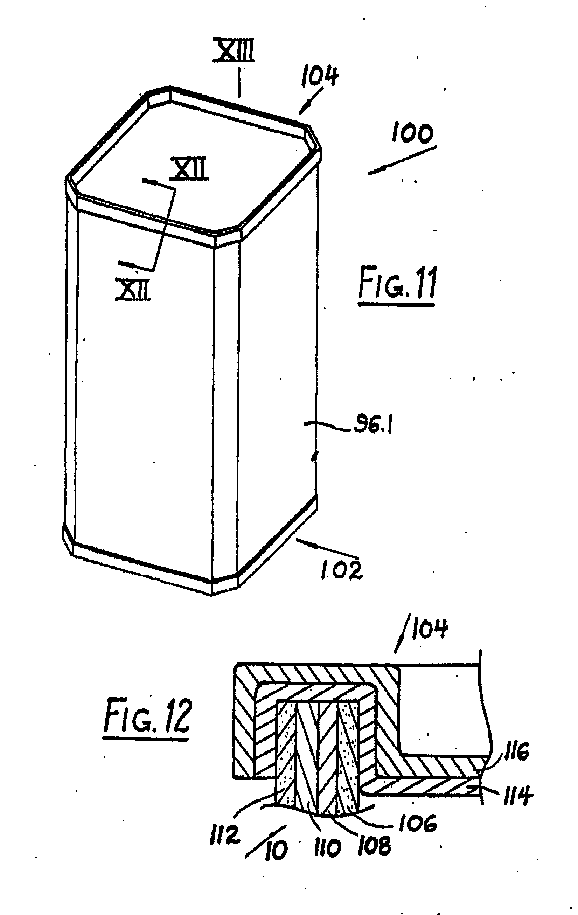

By joining the end longitudinal edges 12, 14 or 42, 44 together as explained above, an elongated tubular sleeve is formed. Such a sleeve is provided in layflat form 94 as illustrated in Figure 10. Thereafter the sleeve 94 is cut into cylindrical sections 96.1, 96.2...96.n. Each of these sections 96.1....96.n is intended eventually to be erected into a cylindrical body for constructing a container which is to be filled.

Referring now to Figure 11, a container 100 is shown which is constructed from one of the sleeves 96.1. The container 100 is closed off at its ends by means of the end caps 102 and 104. The end caps 102, 104 are made of rigid material, such as metal, plastics, paper, board or plastics or foiled covered paper or board, or any laminated combination thereof.

Figure 12 shows a sectional view through one end cap 104. As is illustrated the sheet 10 is constructed of a lamination consisting of an inner layer 106 made of LLDPE, a layer of aluminium foil 108 laminated thereto, a film of PET 110 laminated to the aluminium foil and an outer layer 112 of LDPE laminated to the layer 110. The cap 104 is constructed of a lamination having an inner layer 114 made of LDPE or LLDPE and an outer layer 116 of aluminium foil laminated thereto. The cap 102 has the same construction.

The caps 102 and 104 are suitably joined to the sheet 10, eg. by heat-sealing, glueing, welding or the like.

The caps 102, 104 can also be constructed of three layers comprising of an outer layer of aluminium foil, an inner layer of LLDPE and an intermediate layer of PET.

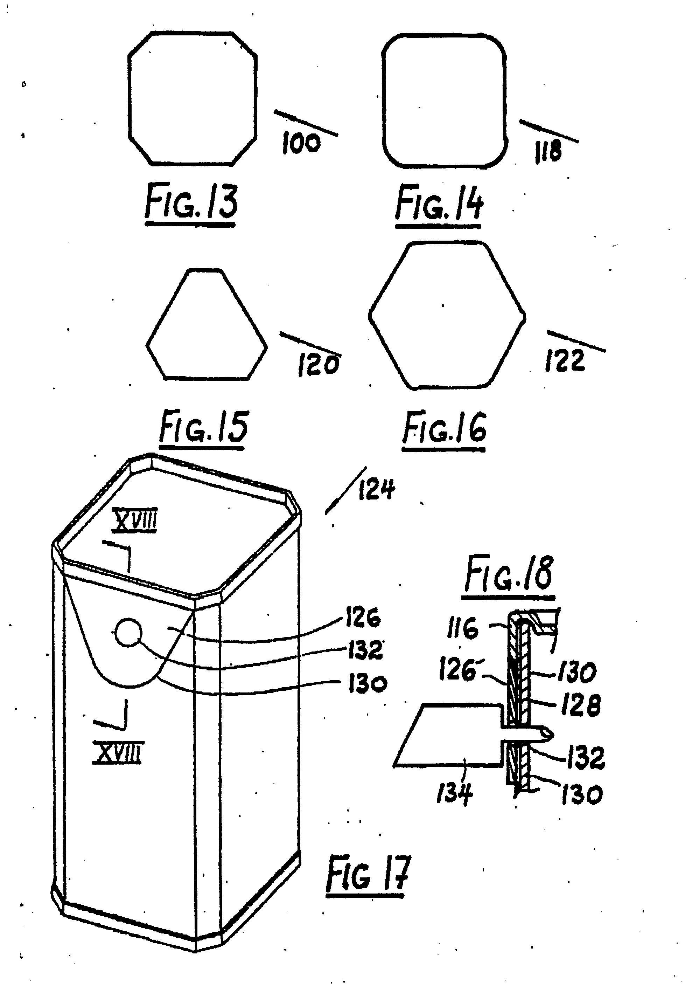

In Figures 13 to 16 various cross-sectional shapes of containers are shown. The container 100 in Figure 13 has a square cross-sectional with straight corner sections.

In Figure 14 the container 118 is also of square-shape in cross-section but the corners are rounded off.

A triangular cross-sectional shape container 120 is illustrated in Figure 15. Here the corners are constructed by means of straight folding sections.

The container 122 of Figure 16 has a polygonal (here hexagonal) shape with straight folding sections at its corners.

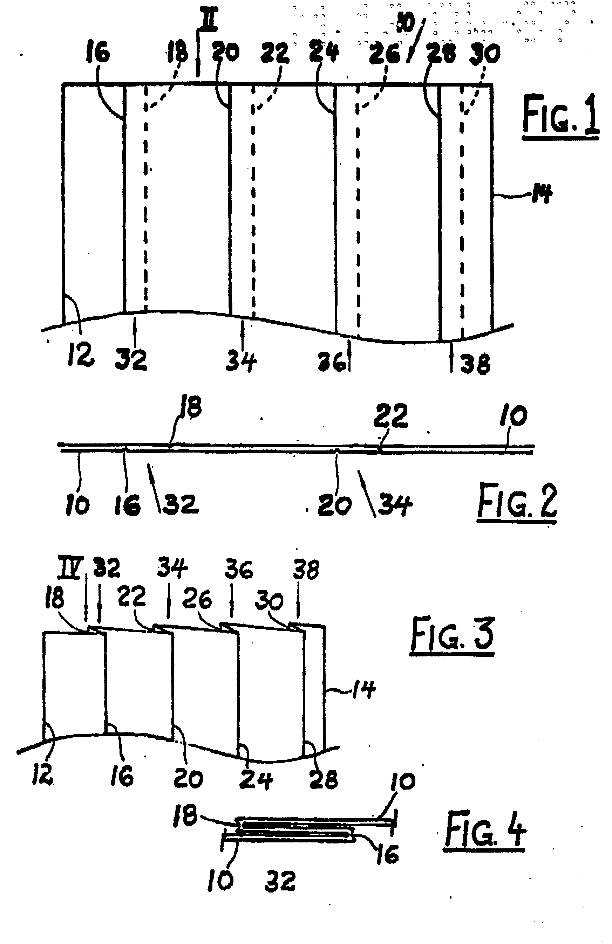

When filled with liquid (eg. beverages) the contents can be poured from the respective containers by rupturing a side wall or an endcap of the container. However, another alternative is to provide a reinforced section where a pouring spout can be fitted to the container. One example is illustrated in Figures 17 and 18. Here with container 124 has a reinforcement lug 126 glued or otherwise sealed at 128 to the outer wall 130 of the container. A weakened area is provided at 132 through which a pouring spout 134 may be inserted for allowing liquid to be poured from the container.

**Claims**

1. A sheet of material for use in producing containers, which comprises a flexible sheet, a number of spaced apart overlapped longitudinal folds provided in the sheet, and attachment means for suitably holding the folds together for stiffening the sheets in longitudinal direction.

2. A sheet of material as claimed in claim 1, in which the folds are substantially parallel.

3. A sheet of material as claimed in claim 1 or claim 2, in which the flexible sheet is made of plastics sheet material, paper sheet material, a laminated sheet material, a metallized plastics or aluminium foil material or any other suitable type of sheet material.

4. A sheet of material as claimed in claim 1 or claim 2, in which the flexible sheet is made of a lamination including the following sheets or films laminated together: Aluminium foil, LLDPE, PET, LDPE or PVdC coated PET.

5. A sheet of material for use in producing containers substantially as hereinbefore described with reference to the accompanying drawings.

6. A cylindrical sleeve for producing a container, which includes a flexible sheet having a number of spaced apart overlapped longitudinal folds provided in the sheet, and attachment means for suitably holding the folds together for stiffening the sheets in longitudinal direction.

7. A sleeve as claimed in claim 6, in which the folds are substantially parallel.

8. A sleeve as claimed in claim 6 or claim 7, in which attachment means for holding the overlapped folds together includes a weld, glue, a heatseal, a hotmelt or any other suitable means.

9. A sleeve as claimed in claim 6 or claim 7, which is of any suitable cross-sectional shape, such as substantially round cylindrical-shape, square-shape, rectangular shape, triangular shape, or any other polygonal cross-sectional shape.

10. A sleeve as claimed in any one of claims 6 to 9, in which the flexible sheet is made of plastics sheet material, paper sheet material, a laminated sheet material, a metallized plastics or aluminium foil material or any other suitable type of sheet material.

11. A sleeve as claimed in any one of claims 6 to 10, in which the flexible sheet is made of a lamination including the following sheets or films laminated together: aluminium foil, LLDPE, PET, LDPE, or PVdC coated PET.

12. A cylindrical sleeve for producing a container substantially as hereinbefore described with reference to the accompanying schematic drawings.

13. A container, which includes a cylindrical sleeve comprising a flexible sheet, a number of spaced apart overlapped longitudinal folds provided in the sheet, attachment means for suitably holding the folds together for stiffening the sheets in longitudinal direction, and an end closure member joined to each open end of the cylindrical sleeve and being sealed thereto.

14. A container as claimed in claim 13, which is in the form of a can adapted for containing liquid, eg. beverages.

15. A container as claimed in claim 13 or claim 14, which has a reinforcement lug on one side through which a pouring member can be inserted into the container.

16. A container substantially as hereinbefore described with reference to the accompanying - schematic drawings.

17. A method of producing a container, which includes the steps of folding a flexible sheet along a number of spaced apart folding lines so as to define substantially parallel spaced apart folding sections, of joining the folded sections together, of joining the free ends of the sheet together into an elongated tubular sleeve, of cutting the tubular sleeve transversely into suitable lengths to form cylindrical sleeves, of opening such a cylindrical sleeve and closing one open end by means of an end member sealed thereto, of filling goods, such as beverages, into the other open end, and of closing the remaining opening by means of an end cap and sealing it thereto.

18. A method of producing a container substantially as hereinbefore described with reference to the accompanying schematic drawings.

FIG.1

FIG.2

FIG.3

FIG.4

**FIG. 8** 12,42 86 14,44

**FIG. 9** 12,42 90 88 14,44 82

**FIG. 5** 40 78 VI 80 42 48 52 56 60 64 68 72 84 76

46 48 50 54 52 58 62 66 70 74 44

**FIG. 6** 48 52 56 60 40 46 50 54 58

**FIG. 7** 78 52 40 48 50 40 46

94

96.1 96.2 96.3 96.4 96.5 96.n

**FIG. 10**

FIG. 11

FIG. 12

FIG.13

100

FIG.14

118

FIG.15

120

FIG.16

122

124

XVIII

XVIII

126
132
130

FIG 17

FIG.18

116
126
130
128
132
130

134

FIG. 1

FIG. 2

FIG. 3

FIG. 4